# EUROPEAN PATENT SPECIFICATION

(11) **EP 1 412 544 B1**
(45) Date of publication and mention of the grant of the patent: **11.01.2006**
(21) Application number: 02751220.1
(22) Date of filing: 02.07.2002
(51) Int. Cl.: C22B 1/00, C22B 23/00

(54) **METHOD FOR RECOVERING NICKEL AND EVENTUALLY COBALT BY EXTRACTION FROM NICKEL-CONTAINING LATERITE ORE**
VERFAHREN ZUR RÜCKGEWINNUNG VON NICKEL UND GEGEBENENFALLS COBALT AUS NICKELHALTIGEM LATERITERZ
PROCEDE DE RECUPERATION DE NICKEL ET EVENTUELLEMENT DE COBALT PAR EXTRACTION D'UN MINERAI DE LATERITE CONTENANT DU NICKEL

(30) Priority: 06.07.2001 FI 20011488
(43) Date of publication of application: 28.04.2004
(73) Proprietor: OMG Finland Oy, 67101 Kokkola (FI)
(72) Inventor: AALTONEN, Antti, FIN-20100 Turku (FI); KARPALE, Kauko, FIN-28400 Ulvila (FI); MALMSTRÖM, Rolf, FIN-10600 Tammisaari (FI)
(74) Representative: Suominen, Kaisa Liisa
(86) International application number: PCT/FI2002/000592
(87) International publication number: WO 2003/004709

(56) References cited:
- GB-A- 2 032 896
- US-A- 3 860 689
- US-A- 4 434 942
- US-A- 5 993 635

## Description

The present invention relates to a method for recovery of nickel and possibly cobalt through leaching from nickel-containing laterite oxide ores.

In this publication nickel-containing laterite ores refer to, if not explicitly stated otherwise, nickel-containing sedimentary oxide material which is relatively rich in iron oxide and/or magnesium oxide. Nickel-containing sedimentary oxide material exists in many different forms, depending on the location of origin. Oxide material may be found in large uniform deposits, as well as in large blocks and in sand-like or gravel-like material.

The chemical composition of laterites varies widely, depending on the mineral composition of the oxide material, which in turn depends on the location of origin. Some laterites contain nickel and cobalt in such amounts which can be recovered. These nickel-containing laterite ores may then show a composition with

| | |
|---|---|
| 0.12 - 3.0 % | Ni |
| 0.05 - 0.28 % | Co |
| 0.2 - 25 % | MgO |
| 0.1-1.0% | CaO |
| 0.1 - 5 % | Al₂O₃ |
| 1.5 - 4.5 % | Cr₂O₃ |
| 5 - 75 % | Fe₂O₃ |
| 0.3 - 2.5 | MnO |
| 2 - 50 | SiO₂ |

Recovery of nickel from laterite ores is complicated by the fact that usually it is not possible first to concentrate the nickel-containing mineral from the laterite ore in a traditional manner. It has been proposed that nickel, and even cobalt, could be recovered from laterite ore by leaching with H₂SO₄ in high concentration in an autoclave, i.e. at a high temperature and a high pressure. The proposed temperature in the autoclave is about 170 to 270 °C, which means a pressure of 40 to 60 atm. Technically this becomes a difficult process, as the leaching at a high temperature and under pressure in an autoclave is made with un-concentrated crushed laterite ore, i.e. with a very large amount of material compared to the recovered amount of nickel. Thus the apparatus will also become large and expensive.

It is known to grind ore or concentrate before leaching in e.g. rod mills or ball mills to a suitable particle size. These mills consist of horizontally rotating vessels with loose grinding bodies in the form of rods or balls. The grinding bodies are made of alloyed steel. The balls are relatively large, with a diameter of about 100 mm. As the vessel rotates the material is comminuted into smaller crystalline particles between the rods or the balls. The vessel rotates relatively slowly, some dozens of revolutions per minute. Recovery of nickel from a nickel-containing laterite ore ground in this manner requires leaching at a high temperature and a high pressure.

US-A-5993635 discloses a method for processing of sulphide mineral compositions. By subjecting sulphide mineral compositions to fine grinding prior to leaching, such compositions can be leached under mild conditions of temperature and pressure.

The object of the present invention is to provide an improved method for the recovery of nickel and possibly cobalt through leaching from nickel-containing laterite oxide ore.

This object is attained with the method having the characteristics defined in the enclosed independent claim 1.

According to the invention nickel and possibly cobalt is recovered through leaching from nickel-containing laterite oxide ore with a method comprising the following consecutive steps:
a) the nickel-containing laterite oxide ore is crushed and ground into a particle size which is suitable for leaching, the ore being finely ground in an attritor mill to a particle size < 10 µm in order to reshape the structure of the mineral particles contained in the ore,
b) the ground laterite ore is leached with a leaching liquid, which is sulphuric acid, hydrochloric acid, or sulphuric acid + SO₂, and
c) nickel and possibly cobalt is recovered from the leaching solution.

The attritor mill is a mill used for hydro-metallurgic grinding of mineral or pre-ground ore. The actual attritor mill comprises a non-rotating vessel, i.e. the grinding vessel, which contains a high number of small grinding balls. The grinding balls comprise e.g. very small steel, ceramic or glass balls, with a diameter of about 1 to 3 mm. The grinding balls are put into motion by a bar arrangement. The bar arrangement comprises typically a rotating shaft arranged axially in the vessel, the shaft being provided with a number of stirring blades or the like. Rotation of the shaft causes the stirring blades to rotate.

The crushed and possibly pre-ground material to be processed in the attritor mill is supplied into the mill as a liquid suspension, usually as a water suspension. The bar arrangement generates a circulation of the grinding balls and the supplied material. Thereby the shaft may rotate relatively rapidly in order to obtain an effective stirring. An attritor mill of 5 kW with about 1000 1/min can be used in small mills with a maximum input of 10 kg/h. A mill of 75 kW and about 400 to 500 1/min can be used at a maximum input of 500 kg/h, and a mill of 1100 kW and about 90 1/min can be used at a maximum input of 30 ton/h.

The grinding in the attritor mill may take 10 to 90 minutes, usually 30 to 60 minutes. When the magnesium content is high, the grinding time may be e.g. 10 to 40 minutes, typically 10 to 20 minutes. Then for example laterite ore particles with a size of about 40 µm can be finely ground into a particle size smaller than 10 µm, usually about 1 to 5 µm. One can assume that the small balls and the effective stirring facilitate the advantageous fine grinding and reshaping of the particle material, particularly regarding the following leaching.

Usually it is not possible to grind laterite ore in a conventional ball mill, because such grinding does not result in the desired fine particle size of < 10 µm. Grinding in an attritor mill can result in substantially smaller particle sizes. However, in step a) the nickel-containing laterite ore can be pre-ground in a conventional rod mill or ball mill before fine grinding in the attritor mill.

As leaching liquid sulphuric acid, sulphuric acid + sulphur di-oxide, or hydrochloric acid are used. The concentration of H₂SO₄ can be e.g. 300 to 600 g/l. The oxide ore can be leached for 30 to 180 minutes, typically for about 60 minutes. Nickel and cobalt can be separated from the obtained leaching solution in a suitable way, known as such. Iron possibly leached from the ore can be precipitated from the leaching solution in a separate step.

According to the invention the crushed and possibly pre-ground nickel-containing oxide ore is ground in an attritor mill in order to facilitate following leaching of nickel and cobalt. It can be assumed that the grinding in the attritor mill affects the crystal structure of the minerals in the laterite ore so that the leaching is made easier. Now it is found that grinding in the attritor mill changes the leachability of the laterite ore, so that nickel and cobalt can be leached at substantially lower temperatures and pressures than previously proposed. After the processing in the attritor mill the laterite ore can be leached even at temperatures below 100 °C, e.g. at 90 to 95 °C, and at atmospheric pressure, whereby the leaching can be made without an autoclave. In leaching at low temperatures, < 100 °C, also iron is dissolved. The iron may be later precipitated separately by raising the temperature and pressure, e.g. in an autoclave at temperatures > 130 °C. At atmospheric pressure the iron may be precipitated for example as jarosite.

If so desired, the leaching in the method according to the invention can be performed at higher temperatures in an autoclave, for example at temperatures of 150 to 270 °C and at correspondingly higher pressures of 8 to 60 atm, so that the iron is precipitated as hematite. The actual leaching is advantageously performed as a counter-current leaching with several steps. The leaching could also be performed as forward current leaching, whereby ground ore and strong acid is fed into the same reaction vessel. The dissolution reaction of the acid raises the temperature to about 100 °C.

In the method according to the invention the leaching of the un-concentrated nickel-containing material should preferably be made at a high concentration of solid material, so that the obtained leaching solution is not too much diluted. Advantageously the solid material is supplied so that a solid material concentration of about 35 % is obtained.

The invention is described below with reference to the enclosed drawings, in which
Figure 1 shows schematically the process steps according to the invention for grinding and counter-current leaching of nickel-containing laterite ore, and
Figure 2 shows schematically the process steps according to the invention for grinding and forward current leaching of nickel-containing laterite ore.

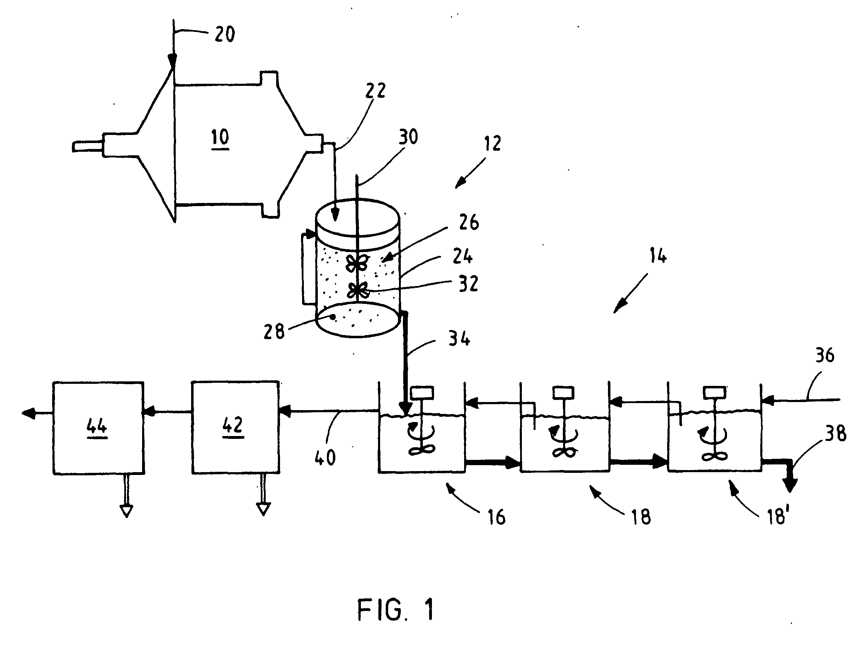

Figure 1 shows a ball mill 10 and an attritor mill 12 for grinding of crushed laterite ore, and a leaching unit 14 with different leaching steps 16, 18 and 18', for the leaching of ground laterite ore. Crushed nickel-containing laterite ore is supplied into the ball mill 10 for pre-grinding of the ore to a particle size of about 40 µm. The pre-ground material 22 is conveyed from the ball mill to the attritor mill 12 for fine grinding of the material to a particle size of < 10 µm, advantageously to about 1 to 5 µm.

The attritor mill 12 comprises a vertical vessel 24, which is open at the top, the so-called grinding space, a bar arrangement 26 and a large amount of small balls 28 in the vessel. The bar arrangement is formed by a shaft 30, which is axially arranged in the vessel and has a number of blades 32, paddles or similar protrusions arranged radially out of the shaft. Pre-ground laterite ore is supplied into the vessel 24 in order to be there stirred by the bar arrangement 26 and together with the small balls 28, so that the laterite ore is finely ground to the desired particle size.

The finely ground laterite ore 34 is discharged from the attritor mill 12 and conveyed to the leaching unit 14. In the leaching unit the finely ground laterite ore is leached with leaching liquid 36, which is arranged to be supplied through the leaching unit in the counter-current direction against the laterite ore. The finely ground laterite ore is first fed to the first leaching step 16 and from there further through the next steps 18 and 18'. The leaching liquid is first fed to the last leaching step 18', and then through the next steps 18 and 16.

If so desired, the laterite ore and the leaching liquid can be arranged to be fed downstream in relation to each other. This may be favourable, for example if one wishes to activate the leaching of newly supplied laterite ore with particularly concentrated leaching liquid.

The leached residual 38 is discharged from the last leaching step 18'. The leaching solution 40 containing leached nickel, cobalt and possibly iron material, is discharged in the process shown in the drawing from the first leaching step 16. The leaching solution 40 is conveyed further to the process steps 42, 44 for separation of nickel and cobalt in a manner known as such.

The grinding and leaching process shown in figure 1 can be carried out rapidly at relatively low temperatures and at atmospheric pressure. According to the invention the fine grinding is carried out in such conditions that the leachability of the material is retained. Thereby it is possible to separate metallic nickel and cobalt from the laterite in an advantageous manner. Nickel and cobalt can be separated for example via liquid/liquid extraction or via some other process known as such, e.g. sulphide precipitation.

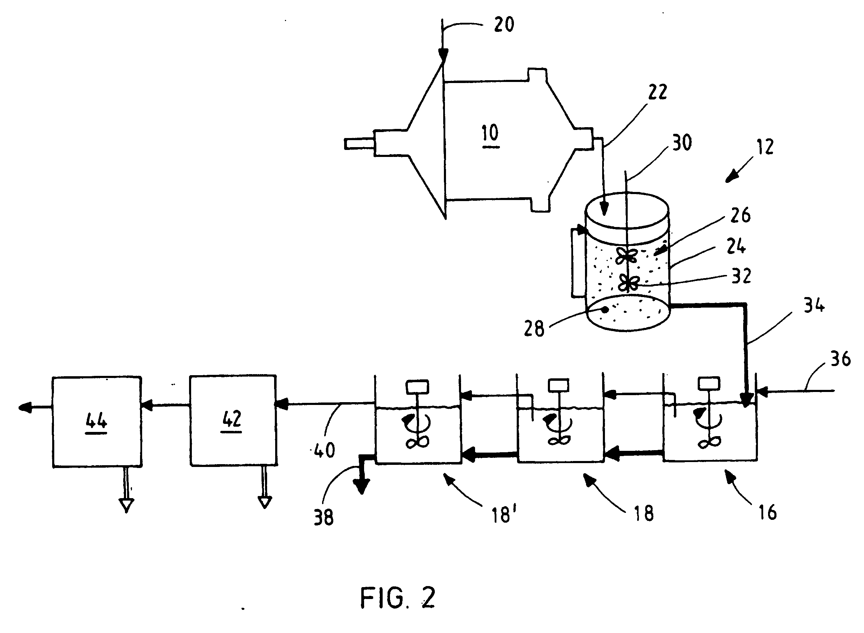

Figure 2 shows in a way corresponding to that of figure 1, the process steps for grinding and forward current leaching of nickel-containing laterite. The numerals of figure 1 have been retained.

In figure 2, where the finely ground ore 34 is supplied in the same way as in figure 1 from the attritor mill 12 to the first step 16' of the leaching unit 14, also the leaching liquid is supplied to the same step 16'. Finely ground laterite ore and leaching liquid is then directed downstream through the next steps 18 and 18' of the leaching unit. The leached residual 38 and the leaching solution 40 is discharged from the last step 18'. The leaching liquid is fed to the separation step 42, 44 for the separation of nickel and any other metals, in a manner known as such.

Thereby the fine grinding of the laterite in the attritor mill according to the invention provides, among other things, the following advantages:
- the laterite is shaped so that it can be leached at relatively low temperatures, and
- due to the grinding in the attritor mill the leaching residual retains a better filterability than otherwise, which provides an advantageous yield.

In the following reference is made partly to grinding experiments, partly to leaching experiments, which were made utilising the invention.

### I Grinding experiment

A sample was pre-ground in a rod mill or ball mill to provide a suitable sample of laterite ore particles with a size of < 40 µm. Then the sample was finely ground in a Vollrath-Salomix sand mill, which is an attritor mill. Ceramic balls and glass balls with a size of 1 to 1.5 mm were used as milling bodies, in a total weight of about 2.5 kg. The fine grinding was made at a suspension density of 35 %. 0.3 % dispergent was added to the suspension. After grinding for 30 minutes the particle size of the sample was 1.2 µm.

### II Grinding and leaching experiment

A laterite ore sample containing 1.2 % Ni, 0.15 % Co, 38 % Fe, 2.0 % Mg and 2.5 % Al, and having a particle size of 36.38 µm, was ground in an attritor mill for 10, 20 and 40 minutes, and then the particle size was measured. The results are presented below.

| **Grinding time (minutes)** | **Particle size (µm)** |
|---|---|
| 0 | 36.38 |
| 10 | 4.19 |
| 20 | 3.34 |
| 40 | 2.49 |

Then the different samples were leached, so that a 10 g sample was leached with 400 ml H₂SO₄ (100 g/l), at 80°C and at atmospheric pressure, and during up to 180 minutes. The result is presented in the table below.

| **Experiment no.** | **t**_{**L**} **(minutes)** | ε_{Me} **(%)** | | |
|---|---|---|---|---|
| | | **Ni** | **Co** | **Fe** |
| **5** | 30 | 61.47 | 99.86 | 38.05 |
| | 60 | 71.35 | 98.36 | 48.41 |
| | 120 | 79.46 | 98.00 | 56.31 |
| | 180 | 74.84 | 98.20 | 55.05 |
| **6** | 30 | 79.33 | 88.73 | 53.74 |
| | 60 | 90.85 | 90.44 | 63.84 |
| | 120 | 89.04 | 85.11 | 54.17 |
| | 180 | 91.01 | 82.73 | 60.00 |
| **7** | 30 | 76.97 | 88.89 | 50.00 |
| | 60 | 88.01 | 94.81 | 57.19 |
| | 120 | 90.20 | 94.81 | 59.02 |
| | 180 | 98.03 | 96.00 | 65.03 |

In leaching of an un-ground sample, of the metals a maximum of 68 % Ni, 10 % Co and 56 % Fe was obtained. In contrast, by leaching a sample activated by grinding, up to 93 % Ni, 80 % Co and 62 % Fe was obtained. The increase of Ni and Co is significant, particularly considering that a low temperature and atmospheric pressure were used.

### III Grinding and leaching experiment

Samples A and B of laterite ore containing Ni, Co, Fe and Mg as follows

| | **Ni** | **Co** | **Fe** | **Mg** |
|---|---|---|---|---|
| **A** | 1.6 | 0.2 | 37.6 | 1.6 |
| **B** | 0.88 | 0.03 | 11.4 | 12.8 |

were ground in an attritor mill according to the following time schedule, whereby the particle sizes given below were obtained.

| | **Grinding time (minutes)** | **Particle size (µm)** |
|---|---|---|
| **A** | - | 40 |
| | 30 | 1.2 |
| | 60 | 0.9 |
| **B** | - | 34 |
| | 30 | 6.6 |
| | 60 | 5.3 |
| | 90 | 4.8 |

The ground laterite ore was leached with H₂SO₄ at 100 °C, at atmospheric pressure. Different concentrations of solid material were tested. The table below shows the amounts of recovered Ni and Co after leaching for 0.5, 1, 2 or 3 hours.

| **Sample** | **Conc. of solids (g/l)** | **Time (h)** | **Recovery in %** | |
|---|---|---|---|---|
| | | | **Ni** | **Co** |
| **A**_{**1**} | 222 | 1 | 97 | 85 |
| **A**_{**2**} | 222 | 0.5 | 82 | > 90 |
| | 222 | 1.0 | 89 | > 95 |
| | 222 | 2.0 | 94 | > 95 |
| | 222 | 3.0 | 97 | > 98 |
| **A**_{**3**} | 300 | 1.0 | 98 | 97 |
| **B** | 170 | 1.0 | 97 | 80 |

Particularly the samples A₃ and B show clearly that a higher concentration of solid material aid in providing a better leaching result, at otherwise similar conditions.

The object is not to limit the invention to relate only to those embodiments presented in more detail here. On the contrary, the object is the utilise the patent within the scope permitted by the enclosed claims.

## Claims

1. A method for the recovery of nickel and possibly cobalt through leaching from nickel-containing laterite oxide ore, whereby the method comprises the following consecutive steps:
a) the nickel-containing laterite oxide ore is crushed and ground into a particle size suitable for leaching, the ore being finely ground in an attritor mill to a particle size < 10 µm in order to reshape the structure of the mineral particles contained in the ore,
b) the ground laterite ore is leached with leaching liquid, which is sulphuric acid, hydrochloric acid, or sulphuric acid + SO₂, and
c) nickel and possibly cobalt is recovered from the leaching solution.

2. A method according to claim 1, **characterised in that** the laterite oxide ore is ground in an attritor mill to a particle size, which is 1 to 5 µm, typically 4 to 5 µm.

3. A method according to claim 1, **characterised in that** the laterite oxide ore is ground in an attritor mill for 10 to 90 minutes, typically 10 to 40 minutes.

4. A method according to claim 3, **characterised in that** the laterite oxide ore has a high magnesium content and that it is ground in an attritor mill for 10 to 20 minutes.

5. A method according to claim 1, **characterised in that** the finely ground laterite oxide ore is leached in step b) in a temperature range of 90 to 95 °C at atmospheric pressure.

6. A method according to claim 5, **characterised in that** the finely ground laterite oxide ore is leached in step b) at atmospheric pressure.

7. A method according to claim 1, **characterised in that** the ground laterite oxide ore is leached in step b) in an autoclave at a temperature between 150 and 270 °C and at a pressure between 8 and 60 atm.

8. A method according to claim 1, **characterised in that** the leaching in step c) is performed in several steps as a counter-current leaching or as a forward current leaching.

9. A method according to claim 1 or 5, **characterised in that** iron is precipitated from the leaching solution at a temperature of > 130 °C in an autoclave.

10. A method according to claim 1, **characterised in that** the leaching is performed at a high concentration, typically at a concentration of 30 to 40 % of solid material.

11. A method according to claim 1, **characterised in that** the concentration of H₂SO₄ at the leaching in step b) is 300 to 600 g/l.

12. A method according to claim 1, **characterised in that** the ground laterite oxide ore is leached in step c) for 30 to 180 minutes, advantageously for about 60 minutes.

13. A method according to claim 1, **characterised in that** nickel and/or cobalt is recovered from a laterite oxide ore having a composition containing
| | |
|---|---|
| 0.12-3.0% | Ni |
| 0.05 - 0.28 % | Co |
| 0.2 - 25 % | MgO |
| 0.1 -1.0 % | CaO |
| 0.1-5% | Al₂O₃ |
| 1.5 - 4.5 % | Cr₂O₃ |
| 5 - 75 % | Fe₂O₃ |
| 0.3 - 2.5 | MnO |
| 2 - 50 | SiO₂ |

## Patentansprüche

1. Verfahren zur Gewinnung von Nickel und möglicherweise Kobalt durch Auslaugen von Nickel-enthaltendem Lateritoxiderz, wobei das Verfahren die folgenden aufeinanderfolgenden Stufen umfasst:
a) das Nickel-enthaltende Lateritoxiderz wird zermalmt und auf eine zum Auslaugen geeignete Partikelgröße gemahlen, wobei das Erz in einer Reibmühle auf eine Partikelgröße < 10 µm feingemahlen wird, um die Struktur der Mineralpartikel, die in dem Erz enthalten sind, umzuformen,
b) das gemahlene Lateriterz wird mit einer Auslaugflüssigkeit ausgelaugt, die Schwefelsäure, Chlorwasserstoffsäure oder Schwefelsäure + SO₂ ist, und
c) Nickel und möglicherweise Kobalt werden aus der Auslauglösung gewonnen.

2. Verfahren nach Anspruch 1, **dadurch gekennzeichnet, dass** das Lateritoxiderz in einer Reibmühle auf eine Partikelgröße gemahlen wird, die 1 bis 5 µm, typischerweise 4 bis 5 µm, beträgt.

3. Verfahren nach Anspruch 1, **dadurch gekennzeichnet, dass** das Lateritoxiderz in einer Reibmühle 10 bis 90 Minuten, typischerweise 10 bis 40 Minuten lang, gemahlen wird.

4. Verfahren nach Anspruch 3, **dadurch gekennzeichnet, dass** das Lateritoxiderz einen hohen Magnesiumgehalt aufweist und dass es in einer Reibmühle 10 bis 20 Minuten lang gemahlen wird.

5. Verfahren nach Anspruch 1, **dadurch gekennzeichnet, dass** das feingemahlene Lateritoxiderz in Stufe b) in einem Temperaturbereich von 90 bis 95°C bei Atmosphärendruck ausgelaugt wird.

6. Verfahren nach Anspruch 5, **dadurch gekennzeichnet, dass** das feingemahlene Lateritoxiderz in Stufe b) bei Atmosphärendruck ausgelaugt wird.

7. Verfahren nach Anspruch 1, **dadurch gekennzeichnet, dass** das gemahlene Lateritoxiderz in Stufe b) in einem Autoklaven bei einer Temperatur zwischen 150 und 270°C und bei einem Druck zwischen 8 und 60 Atmosphären ausgelaugt wird.

8. Verfahren nach Anspruch 1, **dadurch gekennzeichnet, dass** das Auslaugen in Stufe c) in mehreren Stufen als ein Gegenstromauslaugen oder als ein Auslaugen in Stromrichtung durchgeführt wird.

9. Verfahren nach Anspruch 1 oder 5, **dadurch gekennzeichnet, dass** Eisen aus der Auslauglösung bei einer Temperatur > 130°C in einem Autoklaven präzipitiert wird.

10. Verfahren nach Anspruch 1, **dadurch gekennzeichnet, dass** das Auslaugen bei einer hohen Konzentration, typischerweise bei einer Konzentration von 30 bis 40% festes Material durchgeführt wird.

11. Verfahren nach Anspruch 1, **dadurch gekennzeichnet, dass** die Konzentration an H₂SO₄ beim Auslaugen in Stufe b) 300 bis 600 g/l beträgt.

12. Verfahren nach Anspruch 1, **dadurch gekennzeichnet, dass** das gemahlene Lateritoxiderz in Stufe c) 30 bis 180 Minuten lang, vorteilhafterweise etwa 60 Minuten lang, ausgelaugt wird.

13. Verfahren nach Anspruch 1, **dadurch gekennzeichnet, dass** Nickel und/oder Kobalt aus einem Lateritoxiderz mit einer Zusammensetzung gewonnen wird, die Folgendes enthält:
| | |
|---|---|
| 0,12 - 3,0% | Ni |
| 0,05 - 0,28% | Co |
| 0,2 - 25% | MgO |
| 0,1 - 1% | CaO |
| 0,1 - 5% | Al₂O₃ |
| 1,5 - 4,5% | Cr₂O₃ |
| 5 - 75% | Fe₂O₃ |
| 0,3 - 2,5 | MnO |
| 2 - 50 | SiO₂ |

## Revendications

1. Procédé de récupération de nickel et, éventuellement, de cobalt à travers une lixiviation à partir d'un minerai d'oxyde de latérite contenant du nickel, de sorte que le procédé comprend les étapes consécutives suivantes :
a) le minerai d'oxyde de latérite contenant du nickel est écrasé et broyé à la dimension de particules convenant pour une lixiviation, le minerai étant finement broyé dans un broyeur à frottement jusqu'à une dimension de particules < 10 µm afin de reconfigurer la structure des particules de minéral contenues dans le minerai,
b) le minerai de latérite broyée est lixivié avec un liquide de lixiviation, lequel est de l'acide sulfurique, de l'acide chlorhydrique ou de l'acide sulfurique + SO₂, et
c) du nickel et éventuellement du cobalt est (sont) récupéré(s) à partir de la solution de lixiviation.

2. Procédé selon la revendication 1, **caractérisé en ce que** le minerai d'oxyde de latérite est broyé dans un broyeur à frottement jusqu'à une dimension particulaire qui est de 1 à 5 µm, de façon typique de 4 à 5 µm.

3. Procédé selon la revendication 1, **caractérisé en ce que** le minerai d'oxyde de latérite est broyé dans un broyeur à frottement pendant 10 à 90 minutes, de façon typique de 10 à 40 minutes.

4. Procédé selon la revendication 3, **caractérisé en ce que** le minerai d'oxyde de latérite possède une teneur élevée en magnésium et **en ce qu'**il est broyé pendant 10 à 20 minutes dans un broyeur à frottement.

5. Procédé selon la revendication 1, **caractérisé en ce que** le minerai d'oxyde de latérite finement broyé est lixivié à l'étape b) dans une plage de températures allant de 90 à 95° C à la pression atmosphérique.

6. Procédé selon la revendication 5, **caractérisé en ce que** le minerai d'oxyde de latérite finement broyé est lixivié à l'étape b) à la pression atmosphérique.

7. Procédé selon la revendication 1, **caractérisé en ce que** le minerai d'oxyde de latérite broyé est lixivié à l'étape b) dans un autoclave à une température comprise entre 150 et 270°C et à une pression comprise entre 8 et 60 atmosphères.

8. Procédé selon la revendication 1, **caractérisé en ce que** la lixiviation à l'étape c) est réalisée en plusieurs phases en tant qu'une lixiviation à contre-courant ou qu'une lixiviation à courant direct.

9. Procédé selon la revendication 1 ou 5, **caractérisé en ce que** du fer est précipité à partir de la solution de lixiviation à une température de > 130° C dans un autoclave.

10. Procédé selon la revendication 1, **caractérisé en ce que** la lixiviation est exécutée à une concentration élevée, de façon typique à une concentration de 30 à 40 % de matériau solide.

11. Procédé selon la revendication 1, **caractérisé en ce que** la concentration de H₂SO₄ au niveau de la lixiviation à l'étape b) est de 300 à 600 g/l.

12. Procédé selon la revendication 1, **caractérisé en ce que** le minerai d'oxyde de latérite broyé est lixivié à l'étape c) pendant 30 à 180 minutes, de façon avantageuse pendant 60 minutes environ.

13. Procédé selon la revendication 1, **caractérisé en ce que** du nickel et/ou du cobalt est (sont) récupéré(s) à partir d'un minerai d'oxyde de latérite comportant une composition contenant
| | |
|---|---|
| 0,12 - 3,0 % | Ni |
| 0,05 - 0,28 % | Co |
| 0,2 - 25 % | MgO |
| 0,1 - 1,0 % | CaO |
| 0,1 - 5 % | Al₂O₃ |
| 1,5 - 4,5 % | Cr₂O₃ |
| 5 - 75 % | Fe₂O₃ |
| 0,3 - 2,5 | MnO |
| 2 - 50 | SiO₂ |
